Europäisches Patentamt

European Patent Office

Office européen des brevets

(11) Veröffentlichungsnummer: **0 597 290 A2**

# EUROPÄISCHE PATENTANMELDUNG

(21) Anmeldenummer: 93116974.2

(51) Int. Cl.5: **C02F 1/461**

(22) Anmeldetag: **20.10.93**

(30) Priorität: **23.10.92 DE 4235833**

(43) Veröffentlichungstag der Anmeldung:
**18.05.94 Patentblatt 94/20**

(84) Benannte Vertragsstaaten:
**AT BE CH DK FR IT LI LU NL**

(71) Anmelder: **Bäumer, Michael**
**Bonifatiusweg 36a**
**D-48155 Münster(DE)**
Anmelder: **Horstick, Ulrich**

Im Kolk 5
D-48712 Gescher(DE)

(72) Erfinder: **Podwojskij, Pjotr Pawlowitsch**
**Dom 123 Korp. 3, kw. 16**
**22 0114, Minsk Leninskij Prospekt(BY)**

(74) Vertreter: **Patentanwälte Grünecker,**
**Kinkeldey, Stockmair & Partner**
**Maximilianstrasse 58**
**D-80538 München (DE)**

(54) **Verfahren und Anlage zur Reinigung von Abwässern.**

(57) Die Erfindung betrifft ein Verfahren zur elektrochemischen Wasserreinigung, bei dem zur Aufbereitung zwecks Ausscheidung von Verunreinigungen durch Galvano-Koagulation zur reinigendes Wasser versetzt mit Kohlenstoffteilchen durch eine mit dem Pluspol der Stromquelle einer Elektrolysekammer verbundene poröse Masse aus Eisen geleitet wird, sowie eine Vorrichtung zur Durchführung dieses Verfahrens. Das erfindungsgemäße Verfahren und die erfindungsgemäße Vorrichtung lösen die Aufgabe, die Reinigung industrieller Abwässer, insbesondere Schwermetallionen enthaltender industrieller Abwässer, effizienter durchführen zu können.

Die erfindungsgemäße Lösung dieser Aufgabe sieht vor, daß das zu reinigende Wasser vor der Leitung durch die poröse Eisenmasse durch eine weitere mit dem Pluspol verbundene poröse Masse aus einem anodisch nicht löslichen, leitenden Werkstoff geleitet wird. Durch die erfindungsgemäße Lösung läßt sich das Abwasser zur nachfolgenden Abscheidung von Verunreinigungen durch Galvano-Koagulation effizienter aufbereiten, indem ein Zusetzen der porösen Eisenmasse durch Reaktionsprodukte und Begleitstoffe über einen längeren Zeitraum verhindert und die poröse Eisenmasse daher über längere Zeit reaktionsfähig gehalten werden kann.

FIG. 2

EP 0 597 290 A2

Die Erfindung betrifft ein Verfahren entsprechend dem Oberbegriff des Anspruchs 1 und eine Vorrichtung zur Durchführung des Verfahrens entsprechend dem Oberbegriff des Anspruchs 19. Das Verfahren und die Vorrichtung nach der Erfindung sind insbesondere für die Reinigung von Abwasser geeignet, in dem verunreinigende Begleitstoffe dispergiert, emuligiert oder/und gelöst sind.

Aus der Urheberurkunde der UdSSR Nr. 56 58 89 ist eine Anlage zur Abwasserreinigung bekannt, die für Abwässer geeignet ist, die sechswertiges Chrom, Chrom-(VI), enthalten. Die Anlage weist einen Behälter auf, welcher durch eine poröse Scheidewand in eine Anodenkammer und eine Kathodenkammer unterteilt ist, wobei in der Anodenkammer eine nicht lösliche Anode und in Wasserströmungsrichtung dahinter eine lösliche Eisenanode angeordnet ist. Das zu reinigende Wasser wird der Anodenkammer zugeleitet, wo es in einen leicht sauren Zustand gebracht wird, und es erfolgt dann eine Reduktion von Chrom-(VI) durch Oxidation von Eisen-(II), das von der löslichen Anode abgeschieden wird. Aus der Anodenkammer wird das Wasser in die Kathodenkammer geleitet, in der sich durch Alkalisierung Chrom-(III)- und Eisen-(III)-, -(II)-Hydroxyde bilden.

Nachteile dieses Verfahrens bestehen in einem hohen Stromverbrauch, der bei einem anfänglichen Gehalt an Chrom-(VI) von 100 $g/m^3$ im Abwasser 7,8 $kWh/m^3$ beträgt, sowie darin, daß keine Möglichkeit besteht, die Spannung und Stromstärke an den Anoden zu regeln.

Aus der UdSSR-Urheberurkunde Nr. 143 2021 ist eine Elektrolyseanalage zur Reinigung von Schwermetalle und Chrom-(VI) enthaltenden Abwässern bekannt. Diese Anlage weist ein vertikales Gehäuse auf, dessen Innenraum durch vertikale Scheidewände in eine Kathodenkammer und zwei Anodenkammern unterteilt ist. In einer der Anodenkammern ist eine nicht lösliche Anode angeordnet, während in der anderen Anodenkammer eine lösliche durch Schüttung einfüllbare Späneanode vorgesehen ist. Zwischen diesen beiden Anodenkammern befindet sich eine Überlaufeinrichtung, die den oberen Teil der Kammer mit der nicht löslichen Anode mit dem unteren Teil der Kammer mit der löslichen Anode verbindet. Der Kathode und den Anoden wird Strom aus einer Stromquelle zugeleitet, wobei die Kathodenstromdichte bis zu 350 $A/m^2$ und die Stromstärke für die nicht lösliche Anode dreimal höher ist als für die lösliche. Das zu reinigende Abwasser wird in zwei parallelen Strömen durch die Kathodenkammer und durch die Anodenkammern mit einem Durchflußverhältnis von 2,3:1 geleitet und die parallelen Abwasserströme werden danach in einer getrennten Vorrichtung vermischt. Durch die Naßelektrolyse wird das Wasser in der Kathodenkammer alkalisiert und in der Anodenkammer mit der nicht löslichen Anode wird unter Herstellung eines sauren Zustands der pH-Wert verringert. An der löslichen Anode erfolgt eine Auflösung des überschüssigen Eisens, das für die Reduktion von Chrom, welches sowohl in dem durch die Anodenkammer als auch in dem durch die Kathodenkammer geleiteten Abwasserstrom enthalten ist, zur Verfügung steht. Bei Verwendung der einschüttbaren Anode gewährleistet der niedrige pH-Wert des durchgeleiteten Wassers einen stabilen Reinigungsvorgang. Bei einem anfänglichen Gehalt an Chrom-(VI) in dem zu reinigenden Wasser von 86 $g/m^3$ und einem pH-Wert von 4,3 beträgt der Restgehalt an Chrom-(VI) bei einer Reinigungszeit des Wassers von 1,5 min 0,1 $g/m^3$. Nachteile dieser Anlage bestehen darin, daß die Reinigung des Wassers von Chrom-(VI) unvollständig ist und mehr als 70% an ungereinigtem Wasser durch die Kathodenkammer fließen, daß ein Verlust an Sauerstoff, der an der nicht löslichen Anode frei wird, auftritt und daß Regelungsmöglichkeiten für die Spannung und die Stromstärke an den Anoden fehlen und ein hoher Stromverbrauch, der bis zu 8,4 kWh je $m^3$ des zu reinigenden Abwassers beträgt, auftritt.

Aus der UdSSR-Urheberurkunde 91 2664 ist eine weitere Anlage zur Reinigung von chromhaltigen Abwässern bekannt, in der das zu reinigende Abwasser zunächst in zwei Ströme aufgeteilt wird, die in die Kathoden- und Anodenkammer einer Scheidewand-Elektrolyseeinrichtung geleitet werden. Danach wird der Anolyt in einem Elektrokoagulator nach dem Verfahren der Absonderung von überschüssigem Eisen-(II) bearbeitet, danach mit dem Katolyt vermischt und anschließend in eine Anlage zur Wasserklärung geleitet. Das im Katolyt enthaltende Chrom-(VI) wird durch das überschüssige Eisen-(II), das im Anolyt enthalten ist, reduziert. Die Durchgangsmengen von Anolyt und Katolyt stehen im Verhältnis von 1:3,5. Die Betriebstabilität des Elektrokoagultors wird durch den niedrigen pH-Wert des durchgeleiteten Anolyts gewährleistet. Die Elektrolyseeinrichtung und der Elektrokoagulator werden mit Gleichstrom aus mehreren Stromquellen versorgt, wobei die Stromdichte in diesen Einrichtungen auf einem Wert von 30 bis 40 $A/m^2$ gehalten wird. Der Verbrauch an Elektroenergie für die pH-Wert-Verringerung des Anolyts beträgt bei einer Spannung von 18 V an den Zuleitungen zu der Elektrolyseeinrichtung 233,3 $Ah/m^3$. Der spezifische Elektroenergieverbrauch für die Reduktion von Chrom-(VI) bei einem Ausgangsgehalt im zu reinigenden Abwasser von 60 $g/m^3$ beträgt 5,6 Ah je Gramm Chrom-(VI) bei einer Spannung an den Stromleitungen zum Elektrokoagulator von 12 V. Der Restgehalt an Chrom-(VI) beträgt 0,09 bis 0,1 $g/m^3$. Nachteile dieser Anlage bestehen in einer unvollständigen Reinigung des Wasser von Chrom-(VI); der Vorbeileitung von fast 80% an ungereinigtem Wasser an dem Elektrokoagultor, der Möglichkeit nur Abwasser mit einem höheren ph-Wert als 4,5 bis 5,5 effektiv reinigen zu können, hohem Verlust an Sauerstoff, der an den flachen Anoden der Elektrolyseeinrichtung frei wird und in einem hohen spezifischen Elektroenergieverbrauch von 4,96 kWh/m$^3$.

Aus der UdSSR-Urheberurkunde Nr. 141 6447 ist eine weitere Anlage (Elektrokoagulator) zur elektrochemischen Reinigung Schwermetallionen enthaltender Abwässer bekannt. Diese Anlage besteht aus einem Gehäuse, einem perforierten Stahlkorb, der in dem Gehäuse beabstandet zu den Gehäusewänden und dessen Boden angeordnet und an den Minuspol einer Stromquelle angeschlossen ist. Eine Scheidewand wird an der Innenoberfläche der "Korbkathode" angeordnet und teilt den Innenraum des Gehäuses in eine periphere Kathodenkammer und eine zentrale Anodenkammer auf. In dem "Kathodenkorb" ist spielfrei eng an diesen angrenzend ein perforierter Korb aus einem anodisch nicht löslichen Metall angeordnet und am Pluspol einer Stromquelle angeschlossen. Der Innenraum dieses Anodenkorbes ist mit einer perforierten Dichtung aus einem dielektrischen Werkstoff verkleidet und mit einer löslichen Späneanode aufgefüllt. Der Korbboden dient als Stromzleitung. An der Oberfläche der eingefüllten Spändeanode ist ein Gitter angeordnet, auf welches Streifen aufgelegt sind. Sowohl das Gitter als auch die Streifen bestehen aus einem dielektrischen Werkstoff. Auf die Streifen ist eine perforierte V-förmige Metallelektrode aufgelegt und wie die Korbkathode an den Minuspol angeschlossen. Ein Einfüllstutzen für die Zuleitung von zu reinigendem Wasser ist mit einem erweiterten unteren Teil an die Kathode angeschlossen. In dem erweiterten Teil des Stutzens befindet sich ein ringförmiges Solenoid, das an eine Wechselstromquelle angeschlossen und im Inneren mit zusammengebackenen, abreibbaren Magnetitteilchen aufgefüllt ist. Perforationen in der dielektrischen Einlage, im Anoden- und Kathodenkorb sind entsprechend einer gemeinsamen Achse zueinander ausgerichtet vorgesehen. Im unteren Teil des Gehäuses der Anlage ist ein Stutzen mit einem Ventil für den Anschluß einer Vorrichtung zur Durchflußregelung eines indifferenten Elektrolyten durch die Kathodenkammer und im oberen Teil des Gehäuses eine Ausgangskammer vorgesehen, in der sich aufbereitetes Wasser und der indifferente Elektrolyt ansammeln und vermischen. Als Elektrolyt kann eine ein- bis zweiprozentige Natriumchloridlösung bzw. geklärtes gereinigtes Wasser verwendet werden. Bei der Auffüllung der Anlage mit Wasser und Zuleitung von Gleichstrom wird das Wasser in der Kathodenkammer alkalisiert und in der Anodenkammer wird ein saurer Zustand hergestellt. Bei dem Anschluß von Wechselstrom an das Solenoid beginnen sich die Magnetitteilchen abzureiben. Das durchgeleitete zu reinigende Wasser reichert sich dabei mit Magnetitkristallen an und gelangt durch die Löcher in das Zentrum der V-förmigen Elektrode. Weiter gelangt das Wasser durch Kanäle zwischen den dielektrischen Streifen an die Peripherie der V-förmigen Kathode. Hier reichert es sich mit durch das dielektrische Gitter gelangten, von der löslichen Anode stammenden Eisenionen-(II) an. An der Peripherie der Kathode steigt das Wasser über Löcher in der Kathode nach oben und läuft über den Kathodenrand in die Ausgangskammer, wo es sich mit dem indifferenten Elektrolyten vermischt. Im Ergebnis der Aufbereitung des Wassers in der Anodenkammer erfolgt eine Ferritisierung der harten Suspensionsphase, was den nachfolgenden Prozeß der Wasserklärung beschleunigt. Eine Verbrauchsregelung des indifferenten Elektrolyten ermöglicht es, daß ein für die Ferritisierung der harten Komponente nahezu optimaler pH-Wert des Wassers erreicht wird. Die Stabilität der Auflösung der Anodenfüllung wird durch eine erhöhte Azidität des Wassers in der Anodenkammer und eine intensive Auflösung der oberen Schicht der Anodenfüllung, die durch das Gewicht der Kathode und des an ihr befestigten Stutzens mit dem Solenoid verdichtet wird, gewährleistet. Ein Nachteil dieser Anlage besteht darin, daß nur ein geringer Teil von an der flachen Anode frei werdendem Sauerstoff genutzt wird und eine begrenzte Leistungsfähigkeit vorliegt, indem die Wasserreinigung nur an der Oberfläche der einfüllbaren Späneanode erfolgt.

Ein Verfahren entsprechend dem Oberbegriff des Anspruchs 1 ist aus der Urheberurkunde der UdSSR Nr. 16 11 886 bekannt. Dieses zur Reinigung von Schwermetallionen und Chromate enthaltenden Abwässern vorgesehene Verfahren beruht auf der sogenannten Galvano-Koagulation, die eine Gesamtheit von parallel und aufeinanderfolgend ablaufenden elektrochemischen und physikalisch-chemischen Prozessen beinhaltet. Bei diesem bekannten Verfahren wird zu reinigendes Wasser mit staubartigen Koksteilchen und Sauerstoff angereichert und durch eine Einrichtung, die mit einer porösen Eisenmasse (Schrott, Eisenspänen usw.) aufgefüllt ist, hindurchgeleitet. Im Verlauf des Prozesses der Galvano-Koagulation kommt es zum Verbrauch von Koks (Kathodenwerkstoff) und Eisen (Anodenwerkstoff). Der Koksverbrauch bei einem Ausgangsgehalt an Chrom im Wasser von bis zu 200 g/m$^3$ beträgt 2 bis 20 g/m$^3$ des zu reinigenden Wassers, wobei die Aufbereitungszeit 6 min beträgt. Bei einer Ausgangskonzentration an Chrom-(VI) von bis zu 300 g/m$^3$ ergibt sich bei einer Aufbereitungszeit von bis zu 12 min ein Koksverbrauch von 30 g/m$^3$. Zur Beschleunigung der Oxodation von Produkten, die bei dem Galvano-Koagulationsprozeß entstehen, wird das zu reinigende Wasser mit Sauerstoff in einer Konzentration von 0,3 bis 0,6% angereichert und in der Anlage wird ein Überdruck von 0,05 bis 0,15 mPa aufrechterhalten. Die relative Strömungsgeschwindigkeit des Wassers durch die poröse Eisenmasse beträgt bis zu 0,04 m/sec. Ein Nachteil dieses Verfahrens besteht in der vergleichsweise geringen Leistungsfähigkeit, die mit einer Zunahme der Ausgangskonzentration an Chrom-(VI) im zu reinigenden Wasser abnimmt. So werden bei einer Konzentration an Chrom-(VI)

von 200 g/m$^3$ 6 min und bei einer Konzentration an Chrom-(VI) von 300 g/m$^3$ 12 min für die Wasserreinigung benötigt, d.h. bei einem Anstieg der Konzentration um das 1,5fache verdoppelt sich die zur Reinigung erforderliche Zeit. Ein weiterer wesentlicher Nachteil des Verfahren liegt darin, daß zur Reinigung des Wassers von Chrom-(VI) ein Ausgangs-pH-Wert des Wassers < 2,2 erforderlich ist. Ein weiterer Nachteil besteht darin, daß zur Aufrechterhaltung des im Wasser im Molekularzustand vorliegenden Sauerstoffs ein Überdruck benötigt wird. Weiterhin hat dieses bekannte, die Galvano-Koagulation nutzende statische Verfahren den Nachteil, daß infolge der relativ geringen Strömungsgeschwindigkeit des zu reinigenden Wassers durch die poröse Eisenmasse ein Austrag von Reaktionsprodukten aus der Eisenmasse nicht gewährleistet ist. Daher ist es notwendig, die poröse Eisenmasse ständig zu durchspülen oder häufig auszuwechseln.

Es ist die Aufgabe der vorliegenden Erfindung, ein gegenüber dem oben dargelegten Stand der Technik verbessertes Wasserreinigungsverfahren und eine Vorrichtung zur Durchführung dieses Verfahrens zu schaffen.

Diese Aufgabe wird durch die in den kennzeichnenden Teilen der Ansprüche 1 und 19 angegebenen Merkmale gelöst.

Mit der vorliegenden Erfindung wird ein in seiner Leistungsfähigkeit verbessertes Verfahren und eine leistungsfähigere Vorrichtung zur Wasserreinigung geschaffen, wobei der Grad der Reinigung von Begleitstoffen erhöht, der Verbrauch an Reagenzstoffen verringert, und die Stabilität des Reinigungsprozesses erhöht ist. Die verbesserten Eigenschaften werden vor allem dadurch erreicht, daß durch die zusätzliche Durchleitung des zu reinigenden Wassers durch die poröse Masse aus einem anodisch nicht löslichen, leitfähigen Material eine Voraufbereitung des zu reinigenden Wassers derart erreicht wird, daß sich weniger im Wasser vorhandene Begleitstoffe in der porösen Eisenmasse absetzen und die poröse Eisenmassen bezüglich der die Galvano-Koagulation einleitenden Reaktionen mit den dem zu reinigenden Wasser zugesetzten Kohlenstoffteilchen länger aktiv bleiben kann. Insgesamt fällt bei der Reinigung nur sehr wenig Rückstand an, der fast nur aus Hydroxyden und Metalloxiden besteht. Im Gegensatz zu herkömmlichen Verfahren ergeben sich keine nennenswerten Schlammanteile im Rückstand. Vorteilhaft können die bei dem erfindungsgemäßen Reinigungsverfahren auftretenden Rückstande als Ausgangsmaterial für insbesondere zur Abschirmung hochfrequenter elektromagnetischer Strahlung geeigneter Verbundstoffe verwendet werden.

In vorteilhafter Ausgestaltung des erfindungsgemäßen Verfahrens kann vorgesehen werden, daß neben zu reinigendem Wasser in die Elektrolysekammer neutrales Wasser eingeleitet und parallel zu dem zu reinigenden, in der Elektrolysekammer aufzubereitenden Wasser und von diesem durch eine neutrale poröse Scheidewand getrennt durch die Elektrolysekammer hindurch geleitet wird, wobei es in Verbindung mit dem Minuspol der Elektrolysekammerstromquelle steht. Während des Durchgangs durch die Elektrolysekammer wird das neutrale Wasser durch die in der Kammer ablaufenden Elektrolyseprozesse derart alkalisiert, daß sich beim Vermischen dieses alkalisierten neutralen Wassers mit dem durch die Elektrolysekammer getretenen aufbereiteten, zu reinigenden Wasser in dem Mischwasser nahezu der optimale pH-Wert für die Ablagerung von Schwermetallhydroxyden ergibt. Vorteilhaft beträgt die Durchflußmenge des neutralen Wassers 9,5 bis 10% der Durchlfußmenge des zu reinigenden Wassers.

In weiterer vorteilhafter Ausgestaltung der Erfindung wird für die weitere poröse Masse aus anodisch nicht löslichem Material ein Volumen vorgesehen, das 11 bis 19% vom Volumen der porösen Eisenmasse beträgt.

Weitere vorteilhafte Ausgestaltungsmöglichkeiten der Erfindung gehen aus den Unteransprüchen hervor.

Die Erfindung soll nun anhand eines Ausführungsbeispiels und der sich auf dieses Ausführungsbeispiel beziehenden beiliegenden Zeichnungen näher erläutert und beschrieben werden. Es zeigen:

Fig. 1     ein Ausführungsbeispiel für eine erfindungsgemäße Vorrichtung zum Reinigen von Abwässern, und

Fig.2     eine in der Wasserreinigungsvorrichtung gemäß Fig. 1 verwendbare Elektrolysekammer.

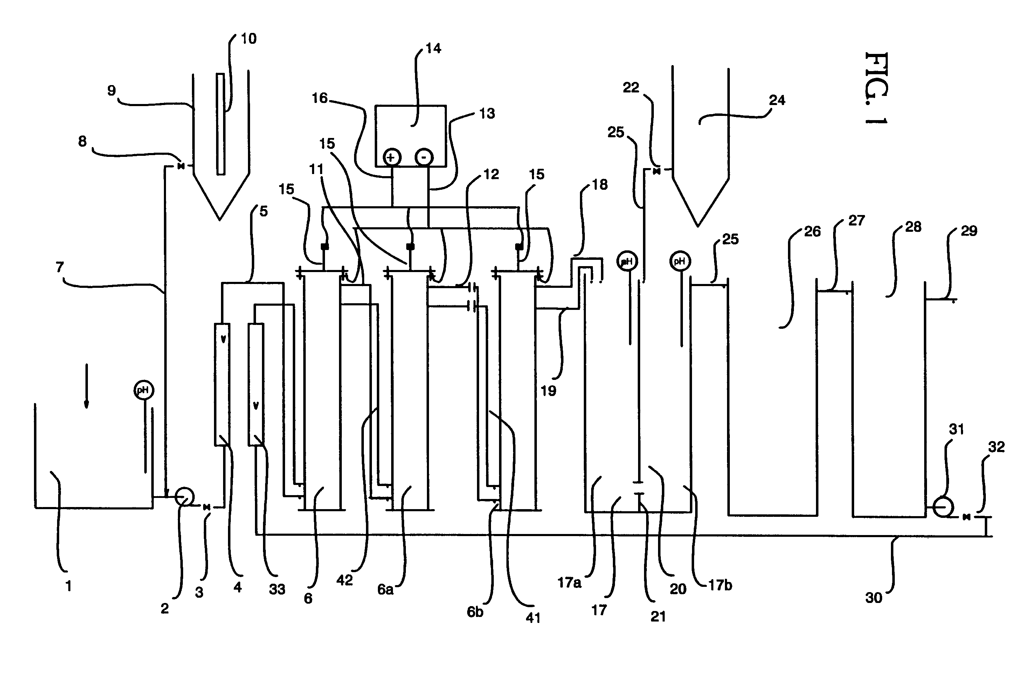

In der Fig. 1 ist mit dem Bezugzeichen 1 ein Abwassersammelbehälter bezeichnet, der über eine eine Pumpe 2, ein Ventil 3 und einen Durchflußmengenmesser 4 enthaltende Leitung 5 mit der ersten von drei hintereinandergeschalteten Elektrolysekammern 6, 6a, 6b verbunden ist. In die Leitung 5 mündet in Durchflußrichtung vor der Pumpe 2 eine ein Ventil 8 aufweisende Leitung 7 ein, die mit einem Behälter 9 für eine Wasserkokssuspension verbunden ist. In dem Behälter 9, der mit einer nicht gezeigten Druckluftquelle in Verbindung steht, ist eine Meßeinrichtung 10 zur Bestimmung der abgegebenen Suspensionsmenge angeordnet. Mit dem Bezugszeichen 11 ist in der Fig. 1 eine Verbindungsleitung zwischen den ersten beiden Elektrolysekammern der drei hintereinander geschalteten Elektrolysekammern 6, 6a, 6b bezeichnet. Eine entsprechende Verbindungsleitung 12 ist auch zwischen der zweiten und dritten Elektrolysekammer vorgesehen. Die Gehäuse der drei Elektrolysekammern 6, 6a, 6b sind über eine sich verzweigende Stromleitung 13 mit dem Minuspol einer Stromquelle 14 verbunden. Gegen das Gehäuse der Elektrolysekammer 6 isolierte Stromschienen 15 sind über eine sich verzweigende Stromleitung 16 mit dem Pluspol der Stromquelle verbunden. die Elektrolysekammern 6 und 6a sind zusätzlich über eine Leitung 42 und die Elektrolysekammern 6a und 6b über eine Leitung 41 miteinander verbunden.

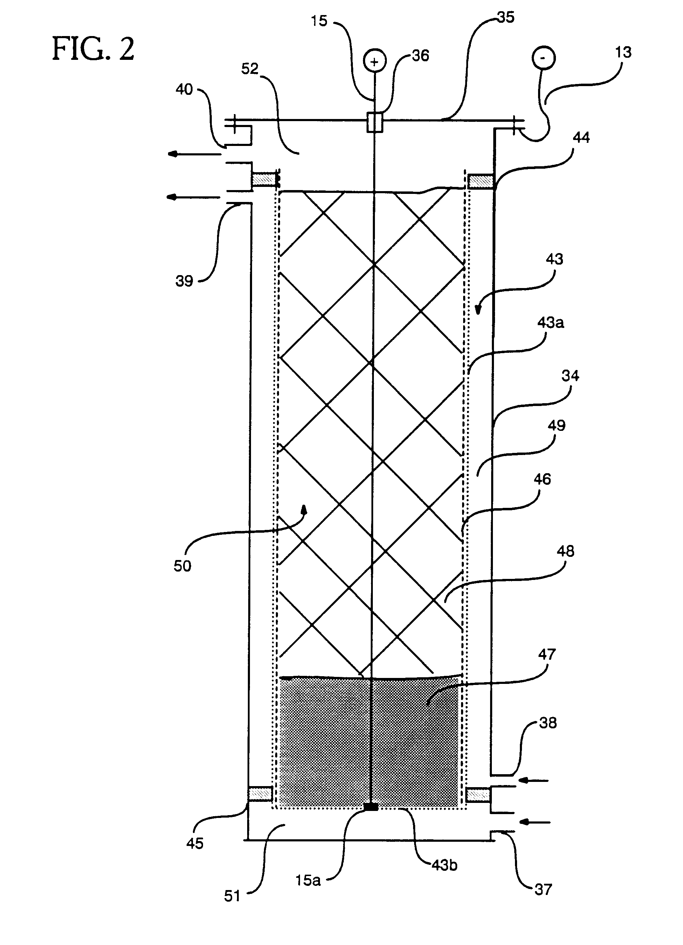

Mit dem Bezugszeichen 17 ist in der Fig. 1 ein Mischbehälter bezeichnet, in den über eine erste, mit der dritten Elektrolysekammer 6b verbundene Leitung 18 Flüssigkeit gelangen kann. Weiterhin kann in den Behälter 17 Flüssikgeit über eine zweite, mit der dritten Elektrolysekammer 6b verbundene Leitung 19 gebracht werden. Die Bedeutung der Leitungen 18 und 19 wird sowie aller genannten Verbindungsleitungen zwischen den Elektrolysekammern später bei der Beschreibung der Elektrolysekammern anhand der Fig. 2 genauer erläutert. Der Mischbehälter 17 ist durch eine Trennwand 20 in Behälterteile 17a und 17b geteilt, wobei der Behälterteil 17a mit dem Behälterteil 17b über eine nahe des Behälterbodens angeordnete Durchgangsöffnung 21 in Verbindung steht. Die Leitungen 18 und 19 sind dazu vorgesehen, Flüssigkeit in den Behälterteil 17a einzugeben. Über eine ein Ventil 22 aufweisende Leitung 23, die mit einem Behälter 24 verbunden ist, kann dem Behälterteil 17b des Mischbehälters 17 aus dem Behälter 24 eine alkalische Lösung zugeführt werden. Von den Leitungen 12 und 41 zweigen (nicht gezeigte) wahlweise benutzbare Leitungen ab, die wie die Leitungen 18 und 19 zu dem Mischbehälter 17 führen.

Der Mischbehälter 17a ist über eine Überlaufleitung 25 mit einem Klärbehälter 26 verbunden und der Klärbehälter 26 über eine Überlaufleitung 27 mit einem Vorratsbehälter für gereinigtes Wasser 28 verbunden. Der Vorratsbehälter 28 ist mit einer Überlaufleitung 29 für gereinigtes Wasser versehen. Nahe seinem Boden ist an den Vorratsbehälter 28 eine eine Pumpe 31, ein Ventil 32 und einen Durchflußmesser 33 enthaltende Leitung 30 angeschlossen, die den Behälter 28 mit der ersten 6 der drei hintereinandergeschalteten Elektrolysekammern 6, 6a, 6b verbindet.

Es wird nun Bezug auf Fig. 2 genommen, wo mit dem Bezugszeichen 34 ein jeweils die Elektrolysekammern 6, 6a und 6b bildendes rohrförmiges Metallgehäuse bezeichnet ist. Das zu einer Durchführung einer Elektrolyse unter Druck hermetisch verschließbar ausbildbare Gehäuse weist einen abnehmbaren Deckel 35 auf. Durch den abnehmbaren Deckel ist die bereits erwähnte Stromschiene 15 geführt, die gegen den Deckel durch einen Isolierblock 36 aus einem dielektrischen Material elektrisch isoliert ist.

Mit den Bezugszeichen 37 und 38 sind in der Fig. 2 an einem Ende der Elektrolysekammer 34 vorgesehene Eingangsanschlüsse bezeichnet. An dem den Eingangsanschlüssen 37 und 38 entgegengesetzten Ende des Elektrolysekammergehäuses 34 sind Ausgangsanschlüsse 39 und 40 vorgesehen.

Innerhalb des Gehäuses 34 ist ein korbartiges Trägergerüst aus einem dielektrischen Werkstoff 43 mit einem zylindrischen Teil 43a und einem Bodenteil 43b angeordnet. Das korbartige Trägergerüst 43 ist innerhalb des Gehäuses 34 durch an den Enden des zylindrischen Teils 43a angeordnete Dichtungsringe 44 und 45 aus einem dielektrischen Material gehaltert. Unmittelbar angrenzend an den zylindrischen Teil 43a des Trägergerüsts 43 ist eine poröse neutrale Scheidewand 46 an dem Trägergerüst 43 befestigt. die neutrale Scheidewand erstreckt sich über die gesamte Länge des zylindrischen Teils 43a des Trägergerüsts 43.

Mit dem Bezugszeichen 47 ist in der Fig. 2 eine im unteren Teil des korbartigen Haltegerüsts 34 angeordnete Aufschüttung von Teilchen aus einem anodisch nicht löslichem, leifähigen Material, im vorliegenden Ausführungsbeispiel Titanspänen, bezeichnet. Über der Aufschüttung 37 aus Titanspänen ist innerhalb des korbartigen Trägergerüsts eine Aufschüttung 48 aus Eisenspänen angeordnet, wodurch etwa der verbleibende Teil des Innenvolumens des korbartigen Trägergerüsts aufgefüllt ist. Das Volumen der anodisch nicht löslichen Titanspäne beläuft sich in dem gezeigten Ausführungsbeispiel auf etwa 10 bis 16% des von dem Trägergerüst 42 gebildeten Innenvolumens.

Wie der Fig. 2 zu entnehmen ist, steht die Kontaktschiene 15 aus einem anodisch nicht löslichen Metall in die Aufschüttungen aus Titan- und Eisenspänen hinein und erstreckt über die gesamte Länge des zylindrischen Teils 43a des Haltegerüsts 43, wobei die Kontaktschiene an ihrem dem Isolierblock 36 gegenüberliegenden Ende über ein Fußteil 15a gegen den Boden 43b des korbartigen Haltegerüsts 43 abgestützt ist.

Durch die Scheidewand 46 und die Dichtungsringe 44 und 45 ist das Innenvolumen des Elektrolysekammergehäuses 34 in eine periphere ringförmige Kathodenkammer 49 und eine sich im wesentlichen über das Innenvolumen des korbartigen Halterungsgerüsts 43 erstreckende Anodenkammer 50 unterteilt. Die Kathode der Kathodenkammer 49 ist durch das Gehäuse 34 gebildet, welches über die bereits erwähnte Leitung 13 mit dem Minuspol der erwähnten Stromquelle 14 verbunden ist. Die Anode innerhalb der Anodenkammer 50 wird durch die mit der Kontaktschiene 15 verbundenen, durch die Aufschüttungen 47 und 48 gebildeten porösen Anodenmassen gebildet.

Die periphere Kathodenkammer steht mit dem Eingangsanschluß 38 und dem Ausgangsanschluß 39 in Verbindung. Der Eingangsanschluß 37 mündet in eine an einem Ende der Anodenkammer 50 gebildete Eingangskammer, die mit der Anodenkarner über den durchlässigen Bodenteil 43b des korbartigen Halterungsgerüsts 43 in Verbindung steht und gegen die Kathodenkammer 49 über den Dichtungsring 45 abgedichtet ist. An dem gegenüberliegenden Ende der Anodenkammer 50 ist eine mit dem Ausgangsanschluß 40 in Verbindung stehende Ausgangskammer 52 gebildet, die gegen die Kathodenkammer 49 durch den Dichtungsring 44 abgedichtet ist. Der Eingangsanschluß 38 und der Ausgangsanschluß 39 der Kathodenkammer 49 ist jeweils nahe dem Dichtungsring und damit nahe jeweils einem Ende der Kathodenkammer angeordnet, so daß eine über die Anschlüsse durch die Kathodenkammer geleitete Flüssigkeit im wesentlichen entlang der gesamten Länge der Kathodenkammer strömen kann.

Alle in der Fig. 1 gezeigten Elektrolysekammern 6 bis 6b weisen den anhand der Fig. 2 beschriebenen Aufbau auf. Die Leitung 5 ist mit dem dem Anschluß 37 entsprechenden Anschluß der Elektrolysekammer 6 verbunden, während die Leitung 30 mit dem dem Eingangsanschluß 38 der Elektrolysekammer 6 entsprechenden Eingangsanschluß verbunden ist. Durch die drei Elektrolysekammern erstrecken sich bis zum Mischungsbehälter 17 zwei parallele Strömungswege, wovon ein Strömungsweg jeweils durch die Anodenkammern der drei Elektrolysekammern und die Verbindungsleitungen 11, 12, und 18 und der andere Strömungsweg durch die peripheren Kathodenkammern der Elektrolysekammern und die Verbindungsleitungen 42, 41 und 19 gebildet ist.

Zur Reinigung von Abwasser wird in dem Behälter 1 gesammeltes Abwasser über die Pumpe 2, das Ventil 3 und den Durchflußmengenmesser 4 in die Einlaßkammer 51 der ersten Elektrolysekammer 6 geleitet. Dem Abwasser wird gesteuert über die Meßeinrichtung 10 und das Ventil 8 aus dem Behälter 9 eine Koksteilchenwasserdispersion zugesetzt. Das mit der Koksteilchenwasserdispersion vermischte Abwasser tritt die Anodenkammer dieser Elektrolysekammer ein und durchströmt nacheinander die Aufschüttungen 47 und 48 und tritt dann über die Auslaßkammer 52 und den Ausgangsanschluß 40 durch die weiteren Elektrolysekammern 6a und 6b, wo es jeweils wieder aufeinanderfolgend die beschriebenen unterschiedlichen Aufschüttungen unter Aufbereitung zwecks Abscheidung von Verunreinigungen durch Galvano-Koagulation durchströmt. Das aufbereitete zu reinigende Wasser gelangt schließlich in den Mischbehälter 17. Parallel zu dem zu reinigenden Wasser wird über die Leitung 30 der ersten Elektrolysekammer neutrales Wasser zugeführt, das auf dem jeweils durch die Kathodenkammern und die Leitungen 42, 41 und 19 gebildeten Strömungsweg in den Mischbehälter 17 gelangt und sich dort mit dem aufbereiteten, zu reinigenden Wasser vermischt. Die aus dem Teil 17a des Behälters 17 durch die Durchlaßöffnung 21 in den Teil 17b des Behälters 17 übertretende Flüssigkeit wird bei Bedarf über die Leitung 23 mit einer alkalischen Lösung aus dem Behälter 24 versetzt. Die im Behälter 17 zur weiteren Aufbereitung behandelte, zu reinigende Flüssigkeit läuft über die Überlaufleitung 25 in den Klärbehälter 26 über, wo sich aus dem Abwasser zu entfernende Verunreinigungen absetzen. Das geklärte Abwasser tritt über die Überlaufleitung 27 in den Sammelbehälter 28 über, von wo aus es über die Überlaufleitung 29 zum Beispiel in die Kanalisation gelangen kann. Nahe dem Boden des Sammelbehälters 28 wird über die die Pumpe 31 enthaltende Leitung so geklärtes Wasser abgeführt, das als das erwähnte neutrale Wasser parallel zu dem zu reinigenden Abwasser durch die Kathodenkammern der Elektrolysekammern geschickt wird.

Im folgenden soll die Wirkungsweise des beschriebenen Wasserreinigungensverfahrens erläutert werden. Beim Durchfluß des mit Koksteilchen angereicherten zu reinigenden Wassers durch die aufeinanderfolgenden Schichten aus der porösen, anodisch nicht löslichen, stromleitenden Masse und der porösen Eisenmasse laufen parallel und aufeinanderfolgend Reaktionen ab, die auf die Bildung von Galvano-Paaren Eisen-Kohlenstoff und die Wirkung des Elektrolysegleichstroms zurückzuführen sind. Die Gesamtheit dieser Reaktionen wird als Galvano-Koagulation bezeichnet, wobei als Anode ein Material dient, das die Fähigkeit besitzt, beim Auflösen im Wasser vorhandene Begleitstoffe zu koagulieren.

Innerhalb der porösen Massen erfolgt unter der Einwirkung des positiven Potentials und des elektrischen Stroms an der Materialoberfläche der porösen Massen die Elektrolyse der Hydroxylionen, wobei Wasserstoffionen und atomarer Sauerstoff frei wird und in das zu reinigende Wasser eintritt, wo sich der atomare Sauerstoff dann zu molekularem Sauerstoff verbindet. An der Materialoberfläche innerhalb der porösen anodisch nicht löslichen Masse wird die gesamte Stromenergie zur Elektrolyse verbraucht. An der Materialoberfläche innerhalb des porösen Eisenmasse wird dagegen nur ein Teil der Stromenergie verbraucht, wobei dieser Teil mit größer werdendem pH-Wert des zu reinigenden Wassers ansteigt. Beim Durchfluß des zu reinigenden Wassers durch die poröse, anodisch nicht lösliche Masse wird dieses in einen stark sauren Zustand versetzt und organische Begleitstoffe des Wassers werden durch den Sauerstoff, insbesondere durch den atomaren Sauerstoff, oxidiert. Beim Durchfluß des zu reinigenden Wassers durch die poröse Eisenmasse kommen die vom Wasser mitgeführten Kohlenstoffteilchen in Kontakt mit dem Eisen und bilden in großer Zahl Galvano-Paare Eisen-Kohlenstoff, die den Galvano-

EP 0 597 290 A2

Koagulationsprozeß hervorrufen. Wesentliche Vorgänge dieses Prozesses sind die Auflösung des Eisens unter Abscheidung von Eisen in das zu reinigende Wasser in Form von Eisen-(II)-Ionen und die Entladung der Wasserstoffionen an den Koksteilchen unter Bildung von atomarem Wasserstoff, der sich dann zu molekularem Wasserstoff verbindet.

Mit zunehmender Eindringtiefe des durch die poröse Eisenmasse strömenden, zu reinigenden Wassers nimmt die Konzentration von Wasserstoffionen im Wasser ab, was eine Verlangsamung der Auflösung von Eisen zur Folge hat. Diese Verlangsamung geht mit dem Anstieg des pH-Wert einher. Bei einem Ausgangs-pH-Wert im zu reinigenden Wasser von 3,5 bis 4,0 kann es bei geringer Durchflußgeschwindikgeit des Wassers durch die poröse Eisenmasse zu einer Sedimentierung von sich bildenden Schwermetallhydroxyden kommen. Gemäß der Erfindung kann der Ablagerung vorgebeugt werden, indem die poröse, anodisch nicht lösliche Masse, zum Beispiel in ihrer Schichtdicke, so vorgesehen wird, daß das durchströmende, zu reinigende Wasser in einen entsprechend stark sauren Zustand versetzt wird. Dadurch ergibt sich aber eine Erhöhung des Verbrauchs an Elektroenergie. Einer Sedimentierung kann auch dadurch vorgebeugt werden, daß das zu reinigende Wasser mit höherer Durchflußgeschwindigkeit, wie im Ausführungsbeispiel gemäß der Fig. 1 gezeigt ist, aufeinanderfolgend durch mehrere Anordnungen aus einer porösen anodisch nicht löslichen Schicht und eine porösen Eisenschicht geleitet wird, wobei bei dem in der Fig. 1 gezeigten Ausführungsbeispiel diese Anordnungen jeweils in einer gesonderten Hydrolysekammer angeordnet sind. Bei einer solchen Reinigung in mehreren Zyklen wird jeweils beim Durchlauf der nächstfolgenden porösen, anodisch nicht löslichen Schicht der pH-Wert in der behandelten, zu reinigenden Flüssigkeit wieder verringert.

Liegt im zu reinigenden Wasser Chrom-(VI) vor, so wird dieses aufgrund der Oxidation von Eisen-(II) zu Eisen-(III) zu Chrom-(III) reduziert.

Es ist auch möglich, in die Prozesse der Galvano-Koagulation Wasserstoff, und insbesondere atomaren Wasserstoff, einzubeziehen. Bei paralleler Durchleitung von neutralem Wasser durch die Kathodenkammer der Elektrolysekammer erfolgt im neutralen Wasser eine Elektrolyse von Wasserstoffionen, wobei Wasserstoff ins Wasser übergeht, was zu einer erheblichen Alkalisierung des Wassers führt. Beim Vermischen von aufbereitetem, zu reinigendem Wasser mit dem alkalisierten durch die Kathodenkammern geleiteten Wasser erreicht der pH-Wert des Gemisches beinahe den optimalen, für eine Ablagerung von Schwermetalloxiden benötigten Wert. Darüber hinaus erfolgt unter der Einwirkung des elektrischen Feldes eine Migration von einem Teil der Kationen aus dem zu reinigenden Wasser durch die neutrale durchlässige Scheidewand ins neutrale Wasser und eine entsprechende Menge von Anionen aus dem neutralen Wasser geht in das zu reinigende Wasser über, wodurch das Reduktions-/Oxidationspotential des Wassers erhöht und der Galvano-Koagulationsprozeß beschleunigt wird.

Im folgenden werden Beispiel konkreter Durchführung des erfindungsgemäßen Verfahrens mit der anhand der Fig. 1 und 2 beschriebenen Vorrichtung gegeben.

Beispiel 1

Es wurden Betriebsabwässer mit einem pH-Wert von 8,2, einem Oxidationsvermögen bzw. einer Oxidierbarkeit von 17,3 g pro 2 $m^3$ und Konzentrationen an Chrom-(VI), Nickel, Zink, Kupfer und Eisen von 198,4; 31,2; 44,1; 20,6 und 12, 1 $g/m^3$ gereinigt. Vom Betrieb gelangte das Wasser in den Behälter 1 und wurde von dort mit der Pumpe 2 durch den Durchflußmesser 4 in die Eingangskammer der ersten Elektrolysekammer 6 gepumpt. In den Saugstutzen der Pumpe 2 wurde aus dem Behälter 9 eine Wasser-Kokssuspension mit einer Kokskonzentration von 19 $g/m^3$ zugeleitet. Der Verbrauch der Wasser-Kokssuspension wurde mit dem Ventil 8 geregelt und durch die Meßeinrichtung 10 kontrolliert. Die Abwassermenge wurde durch das Ventil 3 geregelt. Gleichzeitig wurde in die Kathodenkammer der ersten Elektrolysekammer 6 aus dem Behälter 22 neutrales (gereinigtes) Wasser durch die Leitung (30) und den Durchflußmesser 33 mit Hilfe der Pumpe 31 in einer Menge von 11 bis 13% der Abwasserdurchflußmenge gepumpt. Die Durchflußmenge des neutralen Wassers wurde durch das Ventil 32 geregelt. Aus der Eingangskammer gelangte das Wasser in die Anodenkammer, in der es nacheinander durch die Schicht der porösen Masse aus anodisch nicht löslichem, stromleitenden Teilchen und durch die Schicht der porösen Eisenteilchenmasse aufstieg und dann in die Ausgangskammer der Elektrolysekammer 6 gelangte. Parallel dazu wurde in die Kathodenkammer das neutrale Wasser geleitet. Durch die anhand der Fig. 1 beschriebenen Verbindungsleitungen wurde das teilweise aufbereitete Wasser zur Durchführung weiterer Aufbereitungszyklen in die nächstfolgenden Elektrolysekammen 6a und 6b geleitet, wobei es mehrmals aufeinanderfolgende Schichten von anodisch nicht löslichen Teilchen und anodisch löslichen Eisenteilchen durchströmte. Der Anteil der anodisch nicht löslichen Teilchen betrugt 16% der Menge der Eisenteilchen.

7

Die relative Verweildauer des zu reinigenden Wassers in den porösen Teilchenmassen in den Anodenkammern der einzelnen Elektrolysekammern betrug 2,6 min bei einer relativen Strömungsgeschwindigkeit 0,1 m/sec. Der pH-Wert des aufbereiteten Abwassers und es abgearbeiteten neutralen Wassers verringerte sich im Verlgeich mit dem Ausgangs-pH-Wert des zu reinigenden Wassers um 7,5. die Diffenrenz der Potentiale zwischen den Kontaktschienen 15 und den Gehäusen der Elektrolysekammern betrug 6 V. Der Verbrauch an Elektroenergie belief sich auf 0,3 kWh pro $m^3$ bzw. 1,5 Wh je Gramm Chrom-(VI). Die Druckabnahme des Wasserdruck beim Durchströmen der porösen Teilchenmassen blieb während der Versuchsdurchführung unverändert und betrug 7,07 kPa pro laufenden Meter der porösen Masse.

Im gereinigten Wasser war kein Chrom-(VI) mehr vorhanden. Chrom-(III), Nickel, Zink, Kupfer und Eisen waren in einer Konzentration von 0,012; 0,08; 0,083; 0,05; bzw. 1,4 $g/m^3$ vorhanden. Das Oxidationsvermögen des Wassers bzw. sein Sauerstoffgehalt hat sich auf 2,8 g $O_2/m^3$ verringert bzw. um 86,1% abgenommen.

Beispiel 2

Es wird das gleiche Abwasser wie im Beispiel 1 einer Reinigung unterzogen. Im Unterschied zum Beispiel 1 wurde die relative Strömungsgeschwindigkeit des Wassers durch die Anodenkammern auf einen Wert von 0,18 m/s gehalten. Zu Beginn der Reinigung betrug die Druckdifferenz 6,71 kPa je laufenden Meter und nach 62 Betriebsstunden erreichte diese Differenz 8,05 kPa je laufenden Meter. Eine Überprüfung der porösen Masse der einzelnen Teilchen ergab, daß eine Ablagerung von Sedimentstoffen begonnen hatte.

Beispiel 3

Es wurde das gleiche Wasser wie im Beispiel 1 einer Reinigung unterzogen.

Im Unterschied zum Beispiel 1 wurde die Aufbereitungszeit des zu reinigenden Wassers auf 2,5 min verkürzt. Eine vollständige Beseitigung von Chrom-(VI) wurde nicht erreicht. Der pH-Wert des Gemisches von aufbereitetem, zu reinigendem Wasser und abgearbeitetem, neutralem Wasser stieg auf den Wert von 7,2 und der Elektroenergieverbrauch betrug 0,315 kWh/$m^3$.

Beispiel 4

Es wurde das gleiche Wasser wie im Beispiel 1 gereinigt. Im Unterschied zum Beispiel 1 wurde das Volumen der anodisch nicht löslichen Teilchen auf 11% des Volumens der Eisenteilchen verringert. Zu Beginn der Reinigung lag eine Druckdifferenz wie im Beispiel 1 vor, nach 106 Betriebsstunden erreichte die Differenz 8,13 kPa pro laufenden Meter, was auf die Bildung von Ablagerungen in der porösen Masse der Eisenteilchen hindeutet. Der Reinigungseffekt bezüglich des Oxidationsvermögens des Wassers verringerte sich auf 85% und der pH-Wert des Gemisches von zu reinigendem und neutralem Wasser nahm bis auf 7,0 ab.

Beispiel 5

Es wurde das gleiche Wasser wie im Beispiel 1 gereinigt. Im Unterschied zum Beispiel 1 wurde das Volumen der anodisch nicht löslichen Teilchen auf 19% des Volumens der Eisenteilchen erhöht. Eine vollständige Reinigung von Chrom-(VI) wurde nicht erreicht. Der Reinigungseffekt bezüglich des Oxidationsvermögens erhöhte sich auf 87% und der pH-Wert des Gemisches von zu reinigendem Wasser und neutralem Wasser stieg auf 7,2.

Beispiel 6

Es wurde das gleiche Wasser wie im Beispiel 1 gereinigt. Im Unterschied zum Beispiel 1 wurde die Durchflußmenge an neutralem Wasser auf 9,5% des Durchflusses von zu reinigendem Wasser verringert. Eine vollständige Reinigung von Chrom-(VI) wurde nicht erreicht. Der pH-Wert des Wassergemisches nahm auf 7,0 ab.

Beispiel 7

Es wurde das gleiche Waser wie im Beispiel 1 gereinigt. Im Unterschied zum Beispiel 1 wurde die Durchflußmenge von neutralem Wasser auf 20% der Menge des zu reinigenden Wassers erhöht. Der pH-Wert des Wassergemisches stieg auf 7,3 an.

Beispiel 8

Es wurde das gleiche Abwasser wie im Beispiel 1 gereinigt, jedoch betrug des Ausgangs-pH-Wert 9,2. Im Unterschied zum Beispiel 1 hat sich die Reinigungszeit des Abwassers auf 3,3 min erhöht. Die benötigte Elektrizitätsmenge stieg auf 98 Ah/m$^3$. Der Elekroenergieverbrauch erhöhte sich auf 0,921 kWh/m$^3$. Der pH-Wert des Wassergemisches stieg auf 7,6. Bei einer vollständigen Reinigung des Wassers von Chrom-(VI) betrug die Konzentration an Chrom-(III), Nickel, Zink, Kupfer und am gesamten Eisen 0,007; 0,07; 0,003; 0,05 bzw. 1,3 g/m$^3$. Das Oxidationsvermögen des Wassers lag bei 1,4 g O$_2$/m$^3$ , was einem Reinigungseffekt von 91,9% entspricht.

Beispiel 9

Es wurde das gleiche Abwasser wie im Beispiel 1 gereinigt, jedoch mit einem Ausgangs-pH-Wert von 9,2. Im Unterschied zum Beispiel 1 wurde die Reinigungszeit des Abwassers auf 3,2 min erhöht, die Elektrizitätsmenge stieg auf 98 Ah/m$^3$. Eine vollständige Reinigung von Chrom-(VI) wurde nicht erreicht, der Elektroenergieverbrauch betrug 0,96 kWh/m$^3$ und der pH-Wert des Wassergemisches erhöhte sich auf 7,6.

Beispiel 10

Es wurde das gleiche Wasser wie im Beispiel 1 gereinigt, jedoch mit einem Ausgangs-pH-Wert von 3,9. Im Unterschied zum Beispiel 1 wurde die Reinigungszeit auf 1,6 min verringert. Der Elektroenergieverbrauch stieg auf 0,496 kWh/m$^3$ und der pH-Wert des Wassergemisches nahm auf 5,4 ab. Bei vollständiger Reinigung von Chrom-(VI) betrug die Konzentration an Chrom-(III), Nickel, Zink, Kupfer und an dem gesamten Eisen 0,014; 0,09; 0,004; 0,06 bzw. 1,5 g/m$^3$. Das Oxidationsvermögen des Wassers lag bei 2,5 g O$_2$/m$^3$ , was einem Reinigungseffekt von 85,5% entspricht.

Beispiel 11

Es wurde das gleiche Wasser wie im Beispiel 1 gereinigt, nur betrug der Ausgangs-pH-Wert 3,9. Im Unterschied zum Beispiel 1 wurde die Reinigungszeit auf 1,4 min verringert. Der Elektroenergieverbrauch stieg auf 0,541 kWh/m$^3$ und der pH-Wert des Wassergemisches nahm auf 5,3 ab. Eine vollständige Reinigung des Abwassers von Chrom-(VI) wurde nicht erzielt.

Beispiel 12

Es wurde das gleiche Abwasser wie im Beispiel 1 gereinigt, nur mit einem Ausgangs-pH-Wert von 2,9. Im Unterschied zum Beispiel 1 wurde die Reinigungszeit auf 1,1 min verringert. Der Elektroenergieverbrauch stieg auf 0,75 kWh/m$^3$. Der pH-Wert des Mischwassers nahm auf 4,6 ab. Bei vollständiger Reinigung des Wassers von Chrom-(VI) betrug die Konzentration an Chrom-(III), Nickel, Zink, Kupfer und an dem gesamten Eisen in dem gereinigten Wasser 0,015; 0,11; 0,005; 0,08 bzw. 1,6 g/m$^3$. Das Oxidationsvermögen des Wassers lag bei 2,2 g O$_2$/m$^3$, was einem Reinigungseffekt von 87,5% entspricht.

Beispiel 13

Es wurde das gleiche Abwasser wie im Beispiel 1 gereinigt, nur mit einem Ausgangs-pH-Wert von 2,9. Im Unterschied zu Beispiel 1 wurde die Reinigungszeit bis auf 0,96 min verringert. Der Elektroenergieverbrauch stieg bis auf 0,85 kWh/m$^3$ und der pH-Wert des Mischwassers nahm bis auf 4,5 ab. Eine vollständige Reinigung des Abwassers von Chrom-(VI) wurde nicht erzielt.

## Beispiel 14

Es wurde das gleiche Abwasser wie im Beispiel 1 gereinigt, nur mit einem Ausgangs-pH-Wert von 9,2. Im Unterschied zu Beispiel 1 wurde das zu reinigende Abwasser nur in einer Vorrichtung (Sektion) aufbereitet, d. h., daß das Wasser nur eine Schicht anodisch nicht löslicher Teilchen und eine Schicht von Eisenteilchen durchfloß. Die relative Verweildauer des Wassers in der Anodenkammer betrug 3,3 min, es wurde eine Elektrizitätsmenge von 120 $Ah/m^3$ und eine Elektroenergie von 1,38 $kWh/m^3$ verbraucht. Die relative Strömungsgeschwindikgeit durch die Anodenkammer lag bei 0,0076 m/s, der Druckverlust bei der porösen Teilchenmasse betrug 0,8 kPa pro laufenden Meter. Bei diesen Bedingungen wurde eine vollständige Reinigung von Chrom-(VI) nicht erzielt.

## Beispiel 15

Es wurde das gleiche Abwasser wie im Beispiel 1 gereinigt, nur mit einem Ausgangs-pH-Wert von 9,2. Im Unterschied zu Beispiel 1 wurde das zu reinigende Abwasser nur in einer Vorrichtung (Sektion) aufbereitet. Die relative Verweildauer des Wassers in der Anodenkammer betrug 3,3 min, es wurde eine Elektrizitätsmenge von 125 $Ah/m^3$ und Elektroenergie von 1,5 $kWh/m^3$ verbraucht. Die relative Strömungsgeschwindikgeit durch die Anodenkammer lag bei 0,0076 m/s, der Druckverlust in der porösen Teilchenmasse betrug 0,8 kPa pro laufenden Meter, Bei einer vollständigen Reinigung des Wasser von Chrom-(VI) betrug die Konzentration von Chrom-(III), Nickel, Zink, Kupfer und dem gesamten Eisen im gereinigten Wasser entsprechend 0,013; 0,08; 0,004; 0,06; 1,5 $g/m^3$. Das Oxidationsvermögen des Wassers betrug 2,2 $O_2/m^3$, was einem Reinigungseffekt von 87,3% entspricht.

## Beispiel 16

Es wurde das gleiche Abwasser wie im Beispiel 1 gereinigt, nur mit einem Ausgangs-pH-Wert von 2,9. Im Unterschied zu Beispiel 1 wurden der Vorrichtung kein Strom und neutrales Wasser zugeführt. An der Saugseite der Pumpe 2 wurde mit Hilfe eines Wasserstrahlsaugers Luftsauerstoff dem zu reinigenden Wasser in einer Menge von 0,3 bis 0,5% von der Durchflußmenge des zu reinigenden Wassers zugeführt. Die Verweildauer des Wassers in der porösen Eisenteilchenmasse betrug 3,1 min und der Druckverlust 7,07 kPa pro laufenden Meter. Bei einer vollständigen Reinigung des Wassers von Chrom-(VI) betrug die Konzentration von Chrom-(III), Nickel, Zink, Kupfer und dem gesamten Eisen im gereinigten Wasser entsprechend 0,018, 0,12; 0,005; 0,1; 1,4 $g/m^3$. Das Oxidationsvermögen des gereinigten Wassers betrug 8,1 g $O_2/m^3$, was einem Reinigungseffekt von 53,2% entspricht.

## Beispiel 17

Es wurde das gleiche Abwasser wie im Beispiel 1 gereinigt, nur mit einem Ausgangs-pH-Wert von 3,9. Im Unterschied zu Beispiel 1 wurde der Vorrichtung kein Strom und kein neutrales Wasser zugeführt. An der Saugseite der Pumpe 2 wurde Luftsauerstoff in einer Menge von 0,3 bis 0,5% von der Durchflußmenge des zu reinigenden Wassers zugeführt. Die Verweildauer des Wasser in der porösen Eisenteilchenmasse betrug 2,09 min und der Druckverlust betrug 7,07 kPa pro laufenden Meter. Eine vollständige Reinigung des Wassers von Chrom-(VI) wurde nicht erreicht.

## Beispiel 18

Es wurde das gleiche Abwasser wie im Beispiel 1 gereinigt, nur mit einem Ausgangs-pH-Wert von 3,9. Im Unterschied zu Beispiel 1 wurde der Vorrichtung kein Strom und kein neutrales Wasser zugeführt. An der Saugseite der Pumpe wurde Luftsauerstoff in einer Menge von 0,3 bis 0,5% der Durchflußmenge des zu reinigenden Wassers zugeführt. Die Verweildauer des Wassers in der porösen Eisenteilchenmasse betrug 5,9 min und der Druckverlust war 7,07 kPa pro laufenden Meter. Bei einer vollständigen Reinigung des Wassers von Chrom-(VI) betrug die Konzentration von Chrom-(III); Nickel, Zink, Kupfer und dem gesamten Eisen im gereinigten Wasser entsprechend 0,016; 0,09; 0,005; 0,08; 1,3 $g/m^3$. Das Oxidationsvermögen des gereinigten Wassers lag bei 8,5 g $O_2/m^3$ , was einem Reinigungseffekt von 50,9% entspricht.

Beispiel 19

Es wurde das gleiche Abwasser wie im Beispiel 1 gereinigt, nur mit einem Ausgangs-pH-Wert von 2,9. Im Unterschied zu Beispiel 1 wurde der Vorrichtung kein Strom und kein neutrales Wasser zugeführt. An der Saugseite der Pumpe wurde Luftsauerstoff in einer Menge von 0,3 bis 0,5% der Durchflußmenge des zu reinigenden Wassers zugeführt. Die Verweildauer des Wassers in der porösen Eisenteilchenmasse betrug 5,7 min und der Druckverlust war 7,07 kPa pro laufenden Meter. Eine vollständige Reinigung des Wassers von Chrom-(VI) wurde nicht erreicht.

Aus den ermittelten Daten ist ersichtlich, daß das vorliegende Verfahren und die vorliegende Vorrichtung zur Reinigung von industriellen Abwässern eine Reinigung der Abwässer von Schwermetallionen bis auf Werte zwischen 99,5 und 99,8% und von Chrom-(VI) bis zu 100% ermöglicht. Bei organischen Stoffen ist je nach Oxidierbarkeit bzw. oxodationsvermögen ein Reinigungsgrad zwischen 8,5 und 91,9% erreichbar. Bei einem Ausgangs-pH-Wert der zu reinigenden Wassers von 2,9 beträgt die Aufbereitszeit des zu reinigenden Wassers 0,018 Std., was gegenuber dem aus der Urherberurkunde der UdSSR Nr. 16 11 886 bekannten Verfahren einer Leistungssteigerung um das 5, 6-fache entspricht. Darüber hinaus ermöglichen das neue Verfahren und die neue Vorrichtung, Abwässer mit einem pH-Wert von bis 9,2 ohne vorhergehende Aufbereitung zu reinigen, wobei ein besonders hoher Reinigungsgrad erzielt wird, wenn die hier angegebenen Parameter der Aufbereitung des zu reinigenden Wassers eingehalten werden, und zwar für die Durchflußmenge des neutralen Wassers 9,5 bis 20% der Durchflußmenge des zu reinigenden Wasser, für das Volumen der porösen, anodisch nicht lösbaren stromleitenden Teilchenmasse 11 bis 19% des Volumens der Eisenteilchen und für die relative Strömungsgeschwindikgeit des zu reinigenden Wassers durch die mehrschichtigen poröse Teilchenmasse bei Verwendung von drei Elektrolysekammern bzw. drei zweischichtigen Anordnungen poröser Materialien mehr als 0,18 m/s.

Die in den Beispielen 1 bis 19 ermittelten Werte sind in der nachfolgenden Tabelle 1 zusammengefaßt.

Tabelle 1

| Nr. des Bei- spiels | pH-Wert des Wassers | | Relative Durchfluß geschwin- digkeit des Wassers durch die poröse Teilchen- masse, m/s | Relative Reini- gungszeit des Wassers, in Std. | Elektri- zitäts- menge für 1m³ Wasser, Ah | Span- nung V | Elektro- energie- bedarf für 1m³ Wasser, kWh | Druck- diffe- renz auf 1 lfd. m porö- ser Teil- chen- masse kPa | Reinigungs- effekt, % | | Bemerkungen |
|---|---|---|---|---|---|---|---|---|---|---|---|
| | Ausgangs -wasser | gereinig tes Wasser | | | | | | | Chrom (VI) | Oxydier- barkeit | |
| 1 | 2 | 3 | 4 | 5 | 6 | 7 | 8 | 9 | 10 | 11 | 12 |
| 1 | 8,2 | 7,1 | 0,19 | 0,044 | 50 | 6 | 0,3 | 7.07 | 100 | 86,1 | |
| 2 | 8,2 | 7,1 | 0,18 | 0,044 | 50 | 6 | 0,3 | 6,71 8,05 | 100 | n.b. | *Im Zähler ist die Druckdifferenz zu Beginn des Betriebes und im Nenner nach 62 Betriebsstunden an- gegeben. In der porösen Teilchen- masse bildeten sich Ablagerungen. |
| 3 | 8,2 | 7,2 | 0,19 | 0,042 | 50 | 6,3 | 0,315 | 7,07 | 99,09 | n.b. | |
| 4 | 8,2 | 7,0 | 0,19 | 0,044 | 50 | 6 | 0,3 | 7.07 | 100 | 85,0 | Das Volumen der anodisch nichtlös- lichen porösen Teilchenmasse bet- rug 11% des Volumens der Eisen- teilchenmasse. Im Nenner ist die Druckdifferenz nach 106 Betriebs- stunden angegeben. |
| 5 | 8,2 | 7,2 | 0,19 | 0,044 | 50 | 6 | 0,3 | 7,07 | 99.91 | 87,9 | Das Volumen der anodisch nichtlös- lichen porösen Teilchenmasse bet- rug 19% des Volumens der Eisen- teilchenmasse. |
| 6 | 8,2 | 7,0 | 0,19 | 0,044 | 50 | 6 | 0,3 | 7,07 | 99,85 | n.b. | Der Durchfluß des neutralen Was- sers betrug 9,5% vom Durchfluß d. zu reinigenden Wassers. |

*n.b. nicht bestimmt (Anmerkung des Übersetzers)

EP 0 597 290 A2

| 1 | 2 | 3 | 4 | 5 | 6 | 7 | 8 | 9 | 10 | 11 | 12 |
|---|---|---|---|---|---|---|---|---|---|---|---|
| 7 | 8,2 | 7,3 | 0,19 | 0,044 | 50 | 6 | 0,38 | 7,07 | 100,0 | n.b. | Der Durchfluß von neutralem Wasser betrug 20% vom Durchfluß des zu reinigenden Wasser. |
| 8 | 9,2 | 7,6 | 0,19 | 0,055 | 98 | 9,4 | 0,921 | 7,07 | 100,0 | 91,9 | |
| 9 | 9,2 | 7,6 | 0,19 | 0,053 | 98 | 9,8 | 0,96 | 7,07 | 99,6 | n.b. | |
| 10 | 3,9 | 5,4 | 0,19 | 0,027 | 50 | 9,9 | 0,496 | 7,07 | 100,0 | 85,5 | |
| 11 | 3,9 | 5,3 | 0,19 | 0,024 | 50 | 10,8 | 0,541 | 7,07 | 98,1 | n.b. | |
| 12 | 2,9 | 4,6 | 0,19 | 0,018 | 50 | 15 | 0,75 | 7,07 | 100,0 | 87,3 | |
| 13 | 2,9 | 4,5 | 0,19 | 0,016 | 50 | 17 | 0,85 | 7,07 | 95,5 | n.b. | |
| 14 | 9,2 | 7,5 | 0,0076 | 0,055 | 120 | 11,5 | 1,38 | 9,8 | 99,6 | n.b. | |
| 15 | 9,2 | 7,6 | 0,0076 | 0,055 | 125 | 12,0 | 1,5 | 9,8 | 100,0 | 87,3 | |
| 16 | 2,9 | 4,2 | 0,19 | 0,051* | 0 | 0 | 0 | 7,07 | 100,0 | 53,2 | |
| 17 | 2,9 | 4,2 | 0,19 | 0,049* | 0 | 0 | 0 | 7,07 | 98,4 | n.b | |
| 18 | 3,9 | 4,6 | 0,19 | 0,098* | 0 | 0 | 0 | 7,07 | 100,0 | 50,9 | |
| 19 | 3,9 | 4,5 | 0,19 | 0,095 | 0 | 0 | 0 | 7,07 | 98,9 | n.b. | |

Anmerkungen: 1. Die Ausgangskonzentration an Chrom (VI) im zu reinigenden Wasser war 196,4 g/m$^3$, die permanganate Oxydierbarkeit - 17,3 g $O_2$/m$^3$.

2. Die Dichte der porösen Eisenteilchenmasse (zerkleinerte Späne) betrug im Durchschnitt 2,1 t/m$^3$.

3. Der Koksverbrauch in allen Beispielen betrug 19 g pro m$^3$ Wasser.

EP 0 597 290 A2

EP 0 597 290 A2

4. Das Volumen der anodisch nicht lösbaren, stromleitenden Masse war in allen Beispielen, mit Ausnahme von 4 und 5, 16% vom Volumen der porösen Eisenteilchenmasse.

5. Der Durchfluß von neutralen Wasser in den Beispielen 1 - 5, 8 - 15 betrug 13% vom Durchfluß des zu reinigenden Wassers. In den Beispielen 16 - 19 wurde kein neutrales Wasser zugeführt.

6. In den Beispielen 16 - 19 wurde die Reinigungszeit des Wassers ohne der Verweildauer des Wassers in der porösen Masse der anodisch nichtlöslichen Teilchen berücksichtigt.

7. Vor der Klärung wurde das Gemisch aus dem aufbereiteten gereinigten Wasser und dem abgearbeiteten neutralen Wasser bis zu einem pH-Wert von 8,5-9,0 alkalisiert.

8. In den Beispielen 16 - 19 wurde in das zu reinigende Wasser Luftsauerstoff in einer Menge von 0,3 - 0,5% von der Durchflußmenge des zu reinigenden Wassers zugeführt.

| Nr. des Beispiels | Konzentration von Begleitstoffen im gereinigten Wasser, g/m³ | | | | | Oxydierbarkeit des gereinigten Wassers, g $O_2/m^3$ |
|---|---|---|---|---|---|---|
| | Chrom dreivalenziger | Nickel | Zink | Kupfer | Eisen gesamt | |
| 1 | 0,012 | 0,08 | 0,003 | 0,06 | 1,4 | 4,8 |
| 3 | 0,007 | 0,07 | 0,003 | 0,06 | 1,3 | 1,4 |
| 10 | 0,014 | 0,09 | 0,004 | 0,06 | 1,5 | 2,5 |
| 12 | 0,015 | 0,11 | 0,005 | 0,08 | 1,6 | 2,2 |
| 15 | 0,013 | 0,08 | 0,004 | 0,06 | 1,5 | 2,2 |
| 16 | 0,018 | 0,12 | 0,005 | 0,10 | 1,4 | 8,1 |
| 18 | 0,016 | 0,09 | 0,005 | 0,08 | 1,3 | 8,5 |

Anmerkungen:

1. Die Ausgangskonzentration an Begleitstoffen in dem zu reinigenden Wasser war:

Chrom sechsvalenziger - 198,4 g/m³;

Nickel - 31,3 g/m³;

Zink - 44,1 g/m³;

Kupfer - 20,6 g/m³;

Eisen gesamt - 12,1 g/m³;

Oxydierbarkeit 17,3 g/O₂/m³;

2. Im gereinigten Wasser war kein Chrom (VI) vorhanden.

**Patentansprüche**

1. Verfahren zur elektrolytischen Wasserreinigung, bei dem zur Aufbereitung zwecks Ausscheidung von Verunreinigungen durch Galvano-Koagulation zu reinigendes Wasser versetzt mit Kohlenstoffteilchen durch eine mit dem Pluspol der Stromquelle einer Elektrolysekammer verbundene poröse Masse aus Eisen geleitet wird, **dadurch gekennzeichnet,** daß

   daß das zu reinigende Wasser vor der Leitung durch die poröse Eisenmasse durch eine weitere mit dem Pluspol verbundene poröse Masse aus einem anodisch nicht löslichen, leitenden Werkstoff geleitet wird.

2. Verfahren nach Anspruch 1, **dadurch gekennzeichnet,** daß neben dem zu reinigenden Wasser in die Elektrolysekammer neutrales Wasser eingeleitet und parallel zu dem zu reinigenden, in der Elektrolysekammer aufzubereitenden Wasser und von diesem durch eine poröse neutrale Scheidewand getrennt durch die Elektrolysekammer hindurchgeleitet wird, wobei es in Verbindung mit dem Minuspol der Elektrolysekammerstromquelle steht.

3. Verfahren nach Anspruch 1 oder 2, **dadurch gekennzeichnet,** daß das Volumen der weiteren porösen Masse 11 bis 19% des Volumens der porösen Eisenmasse beträgt.

4. Verfahren nach einem der Ansprüche 1 bis 3, **dadurch gekennzeichnet,** daß die Durchflußmenge des neutralen Wassers 9,5 bis 10% der Durchflußmenge des zu reinigenden Wassers beträgt.

5. Verfahren nach einem der Ansprüche 1 bis 4, **dadurch gekennzeichnet,** daß das zu reinigende Wasser zur Aufbereitung durch eine Anordnung mehrerer, jeweils aus einer Schicht aus anodisch nicht löslichem leitfähigen Material und einer porösen Eisenschicht bestehender poröser Massen geleitet wird.

6. Verfahren nach Anspruch 5, **dadurch gekennzeichnet,** daß die mehreren porösen Massen jeweils in voneinander getrennten, von dem aufzubereitenden Wasser nacheinander durchströmten Elektrolysekammern angeordnet werden.

7. Verfahren nach Anspruch 5 oder 6, **dadurch gekennzeichnet,** daß die mehreren porösen Massen von dem aufzubereitenden Wasser mit einer Geschwindigkeit > 0,18 m/sec durchströmt werden.

8. Verfahren nach einem der Ansprüche 1 bis 7, **dadurch gekennzeichnet,** daß als poröse Eisenmasse und weitere poröse Masse Teilchenmassen verwendet werden.

9. Verfahren nach Anspruch 8, **dadurch gekennzeichnet,** daß als Eisenteilchenmasse eine Aufschüttung aus Eisenspänen verwendet wird.

10. Verfahren nach einem der Ansprüche 1 bis 9, **dadurch gekennzeichnet,** daß das anodisch nicht lösliche Material Titan ist.

11. Verfahren nach Anspruch 10, **dadurch gekennzeichnet,** daß als weitere poröse Masse aus anodisch nicht löslichem, leitfähigen Material eine Aufschüttung aus Titanspänen verwendet wird.

12. Verfahren nach einem der Ansprüche 1 bis 11, **dadurch gekennzeichnet,** daß als Kohlenstoffteilchen Koksstaubteilchen verwendet werden.

13. Verfahren nach einem der Ansprüche 1 bis 12, **dadurch gekennzeichnet,** daß dem zu reinigenden Wasser, um es mit Kohlenstoffteilchen zu versetzen, eine Wasser-Koksstaubdispersion zugeführt wird.

14. Verfahren nach einem der Ansprüche 1 bis 13, **dadurch gekennzeichnet,** daß das zu reinigende Wasser mit Kohlenstoffteilchen versetzt wird, nachdem es die weitere poröse Masse aus anodisch nicht löslichem, leitenden Material durchströmt hat und bevor es durch die poröse Eisenmasse strömt.

15. Verfahren nach einem der Ansprüche 2 bis 14, **dadurch gekennzeichnet,** daß das zu reinigende, in der Elektrolysekammer aufbereitete Wasser und das parallel dazu, getrennt durch die Scheidewand durch die Elektrolysekammer geleitete Wasser zur weiteren Aufbereitung gemischt werden.

16. Verfahren nach einem der Ansprüche 1 bis 15, **dadurch gekennzeichnet,** daß das zu reinigende, in der Elektrolysekammer aufbereitete Wasser oder die Mischung aus dem aufbereiteten Wasser und dem parallel dazu durch die Eletrolysekammer geleiteten Wasser zwecks Abscheidung von Verunreinigungen durch Koagulation alkalisiert wird.

17. Verfahren nach Anspruch 16, **dadurch gekennzeichnet,** daß eine Alkalisierung erfolgt, um einen pH-Wert von 7,5 zu erreichen.

18. Verfahren nach einem der Ansprüche 1 bis 17, **dadurch gekennzeichnet,** daß an die beiden Pole der Elektrolysekammer eine Spannung zwischen 6 und 7,5 Volt angelegt wird.

19. Vorrichtung zur Wasserreinigung, mit einer Elektrolysekammer (6, 6a, 6b), einer in der Elektrolysekammer angeordneten, mit dem Pluspol der Elektrolysekammerstromquelle (14) verbundenen porösen Masse (48) aus Eisen, einer Einrichtung (7 bis 9) zum Einbringen von Kohlenstoffteilchen in zu reinigendes Wasser und Leitungseinrichtungen (37, 51, 46, 52, 40) zum Leiten von zu reinigendem Wasser durch die Elektrolysekammer unter Durchströmung der porösen Masse aus Eisen zur Aufbereitung des zu reinigenden, mit Kohlenstoffteilchen versetzten Wassers zwecks Abscheidung von Verunreinigungen durch Galvano-Koagulation, **dadurch gekennzeichnet,** daß in der Elektrolysekammer stromaufwärts zu der porösen Eisenmasse verbunden mit dem Pluspol der Elektrolysekammerstromquelle eine weitere poröse Masse (47) aus einem anodisch nicht löslichen, leitfähigen Material angeordnet ist, und daß die Leiteinrichtungen zur Leitung des zu reinigenden Wassers nacheinander durch die weitere poröse Masse und die poröse Eisenmasse ausgebildet sind.

20. Vorrichtung nach Anspruch 19, **dadurch gekennzeichnet,** daß die Elektrolysekammer, im wesentlichen durch eine neutrale poröse Scheidewand (46), in eine die porösen Massen enthaltende Anodenkammer (50) und eine periphere Kathodenkammer (49) unterteilt ist.

21. Vorrichtung nach Anspruch 20, **dadurch gekennzeichnet,** daß die periphere Kathodenkammer eine Einlaßöffnung (38) und eine Auslaßöffnung (39) für die Durchleitung von neutralem Wasser durch die

EP 0 597 290 A2

Kathodenkammer aufweist.

22. Vorrichtung nach Anspruch 20 oder 21, **dadurch gekennzeichnet,** daß die Anodenkammer und die Kathodenkammer zylindrisch und zueinander koaxial angeordnet vorgesehen sind.

23. Vorrichtung nach Anspruch 22, **dadurch gekennzeichnet,** daß die Zylindermantelfläche der Anodenkammer bzw. die Innenfläche der peripheren Kathodenkammer im wesentlichen durch die neutrale poröse Scheidewand gebildet ist.

24. Vorrichtung nach einem der Ansprüche 20 bis 23, **dadurch gekennzeichnet,** daß in der Elektrolysekammer eine korbartige durchlässige Halterungseinrichtung (43) aus einem dielektrischen Material zur Halterung der Scheidewand und der porösen Massen vorgesehen ist.

25. Vorrichtung nach Anspruch 24, **dadurch gekennzeichnet,** daß die neutrale poröse Scheidewand unmittelbar angrenzend an die korbartige Halterungseinrichtung angeordnet ist.

26. Vorrichtung nach Anspruch 24 oder 25, **dadurch gekennzeichnet,** daß die porösen Massen als von der korbartigen durchlässigen Halterungseinrichtung aufgenommene Teilchenaufschüttungen (47, 48) vorgesehen sind.

27. Vorrichtung nach Anspruch 26, **dadurch gekennzeichnet,** daß die poröse Eisenmasse (48) über der weiteren porösen Masse (47) aus einem anodisch nicht löslichem, leitfähigen Material aufgeschüttet ist.

28. Vorrichtung nach einem der Ansprüche 20 bis 27, **dadurch gekennzeichnet,** daß die Elektrolysekammer an einem Ende Kathoden- und Anodenkammer eine Einlaßkammer (51) mit einer Einlaßöffnung (37) für zu reinigendes Wasser aufweist.

29. Vorrichtung nach einem der Ansprüche 20 bis 28, **dadurch gekennzeichnet,** daß die Elektrolysekammer an einem Ende eine Auslaßkammer (52) mit einer Auslaßöffnung (40) für durch die Kammer geleitetes Wasser aufweist.

30. Vorrichtung nach Anspruch 29, **dadurch gekennzeichnet,** daß die periphere Kathodenkammer gegen die Einlaßkammer und die Auslaßkammer jeweils durch eine sich zwischen einer Gehäusewand (34) der Elektrolysekammer und der neutralen porösen Scheidewand erstreckende Ringdichtung (44, 45) aus einem dielektrischen Material abgedichtet ist.

31. Vorrichtung nach Anspruch 30, **dadurch gekennzeichnet,** daß die die Einlaß- und die Auslaßöffnung der Kathodenkammer jeweils nahe bei einer der beiden Ringdichtungen angeordnet ist.

32. Vorrichtung nach einem der Ansprüche 19 bis 31, **dadurch gekennzeichnet,** daß das Gehäuse der Elektrolysekammer als Kathode mit dem Minuspol der Elektrolysekammerstromquelle verbunden ist.

33. Vorrichtung nach einem der Ansprüche 19 bis 32, **dadurch gekennzeichnet,** daß die porösen Massen mit dem Pluspol über eine gegen die Gehäusewand isolierte, die porösen Massen durchdringende Kontaktschiene (15) aus einem anodisch nicht löslichen Metall verbunden sind.

34. Vorrichtung nach Anspruch 33, **dadurch gekennzeichnet,** daß sich die Kontaktschiene innerhalb der Anordenkammer im wesentlichen über die gesamte Länge der Anodenkammer erstreckt.

35. Vorrichtung nach einem der Ansprüche 19 bis 34, **dadurch gekennzeichnet,** daß mehrere hintereinander oder/und parallel geschaltete Elektrolysekammern (6, 6a, 6b) vorgesehen sind.

36. Vorrichtung nach Anspruch 35, **dadurch gekennzeichnet,** daß die Elektrolysekammern über Abzweigungen aufweisende Verbindungsleitungen (11, 12) miteinander verbunden sind.

37. Vorrichtung nach einem der Ansprüche 19 bis 36, **dadurch gekennzeichnet,** daß die Elektrolysekammer mehrere, jeweils aus einer porösen Eisenmasse und einer weiteren porösen Masse aus anodisch nicht löslichem, leitfähigem Material bestehende Anordnungen poröser Massen aufweist.

17

**38.** Vorrichtung nach Anspruch 37, **dadurch gekennzeichnet,** daß die Anordnungen in bezug auf die Durchströmung hintereinander oder/und parallel zueinander angeordnet sind.

**39.** Vorrichtung nach einem der Ansprüche 19 bis 38, **dadurch gekennzeichnet,** daß die Elektrolysekammer zur vertiaklen Durchströmung von unten nach oben und/oder von oben nach unten vorgesehen ist.

**40.** Elektrolysekammer nach einem der Ansprüche 19 bis 39, **dadurch gekennzeichnet,** daß das Gehäuse der Elektrolysekammer ein Metallgehäuse, vorzugsweise ein Stahlgehäuse ist.

**41.** Vorrichtung nach einem der Ansprüche 19 bis 40, **dadurch gekennzeichnet,** daß die porösen Massen Teilchenmassen sind.

**42.** Vorrichtung nach Anspruch 40, **dadurch gekennzeichnet,** daß die Teilchen durch Metallspäne gebildet sind.

**43.** Vorrichtung nach einem der Ansprüche 19 bis 42, **dadurch gekennzeichnet,** daß das anodisch nicht lösliche, leitfähige Material Titan ist.

FIG. 1

# FIG. 2